Europäisches Patentamt

European Patent Office

Office européen des brevets

(11) Veröffentlichungsnummer: **0 042 534**
**A1**

## (12) EUROPÄISCHE PATENTANMELDUNG

(21) Anmeldenummer: 81104428.8

(22) Anmeldetag: 10.06.81

(51) Int. Cl.³: **C 08 L 23/02**

(30) Priorität: 21.06.80 DE 3023329

(43) Veröffentlichungstag der Anmeldung:
30.12.81 Patentblatt 81/52

(84) Benannte Vertragsstaaten:
BE DE FR GB NL

(71) Anmelder: EC ERDÖLCHEMIE GMBH
Postfach 75 2002
D-5000 Köln 71(DE)

(72) Erfinder: Stahlke, Kurt-Rainer, Dr.
Amselweg 7
D-5067 Kuerten-Bechen(DE)

(72) Erfinder: Streib, Hugo, Dr.
Am Heckerhof 56
D-4150 Krefeld 1(DE)

(72) Erfinder: Höck, Uwe
Scottweg 76
D-5600 Wuppertal 11(DE)

(74) Vertreter: Mann, Volker, Dr. et al,
c/o Bayer Aktiengesellschaft Zentralbereich Patente
Marken und Lizenzen
D-5090 Leverkusen-Bayerwerk(DE)

(54) Polymerabmischungen aus polyolefinhaltigen Polymeren und siliciumhaltigen Polymeren, Verfahren zu ihrer Herstellung und ihre Verwendung.

(57) Die vorliegende Erfindung betrifft Polymerabmischungen, die 92 bis 99,8 Gew.-% eines polyolefinhaltigen Polymeren mit einem Schmelzindex von 0,1 bis 20 g/10 Minuten (190°C) und 0,2 bis 8 Gew.-% eines linearen Polydialkylsiloxans mit einem Molekulargewicht von 400.000 bis 1.000.000 enthalten. Diese Polymerabmischungen zeigen bei im wesentlichen unveränderten mechanischen Eigenschaften, verglichen mit dem reinen polyolefinhaltigen Polymeren, stark veränderte Oberflächeneigenschaften, wie erniedrigte Reibwerte und erniedrigtes Selbstverschweißen, das etwa bei der Verwendung als Schrumpfhaube Bedeutung hat.

EP 0 042 534 A1

EC Erdölchemie GmbH                    Köln-Worringen
                                       Ha-by-c


Polymerabmischungen aus polyolefinhaltigen Polymeren
und siliciumhaltigen Polymeren, Verfahren zu ihrer Herstellung und ihre Verwendung

Die vorliegende Erfindung betrifft Polymerabmischungen,
die polyolefinhaltige Polymere und Polydialkylsiloxane
enthalten, ein Verfahren zu ihrer Herstellung sowie
ihre Verwendung.

Es ist bekannt, Polyolefine in ihren Produkteigenschaften zu modifizieren, indem man Abmischungen mit
anderen Polymeren herstellt. So sind Abmischungen von
Polyolefinen mit Ethylen-Vinylacetat-Copolymeren, von
Polyolefinen untereinander, wie Polyethylen/Polypropylen,
oder mit Synthese-Kautschuk, wie Butylkautschuk,
Ethylen-Propylen-Polymeren (EPM) oder Ethylen-Propylen-
Dien-Polymeren (EPDM) bekannt. Diesen Abmischungen
ist gemeinsam, daß in der Regel Harze erhalten werden,
die Produkte mit verbesserten mechanischen Eigenschaften
ergeben. Bei Folienharzen sind dies insbesondere eine
verbesserte Schockfestigkeit, bei Kabelharzen beispielsweise eine verbesserte Spannungsrißbeständigkeit.

Es wurde nun überraschenderweise gefunden, daß Abmischungen von polyolefinhaltigen Polymeren mit

EC 110 -Ausland

Silicium enthaltenden Polymeren ein grundsätzlich anderes Verhalten zeigen. Bei Zusatzmengen eines Silicium enthaltenden Polymeren, die den Zusatzmengen der obengenannten Abmischungen vergleichbar sind, ergeben sich keine wesentlichen Verbesserungen der mechanischen Eigenschaften; beispielsweise werden bei der Verarbeitung zu Folien auch bei hohen Zusatzmengen nur sehr weiche Folien erhalten. Bei solchen Polymerabmischungen, die Silicium enthaltende Polymere enthalten, treten jedoch Oberflächeneffekte auf, die sich beispielsweise in einer deutlichen Reduzierung des Reibwertes zeigen.

Es wurden nun neue Polymerabmischungen gefunden, die 92 bis 99,8 Gew.-% eines polyolefinhaltigen Polymeren mit einem Schmelzindex von 0,1 bis 20 g/10 Minuten (190°C) und 0,2 bis 8 Gew.-% eines linearen Polydialkylsiloxans mit einem Molekulargewicht von 400 000 bis 1 000 000 enthalten.

Als Polydialkylsiloxane seien beispielsweise solche genannt, die Alkylgruppen mit 1 bis 4 Kohlenstoffatomen enthalten, wie Polydimethylsiloxan, Polydiethylsiloxan, Polydipropylsiloxan oder Polydibutylsiloxan, bevorzugt Polydimethylsiloxan. Als Molekulargewicht der Polydialkylsiloxane sei beispielsweise ein mittleres Molekulargewicht von 400 000 bis 1 000 000, bevorzugt von 450 000 bis 750 000 genannt. Erfindungsgemäß werden lineare Polydialkylsiloxane eingesetzt. Als solche sind dem Fachmann beispielsweise nahezu unverzweigte Polydialkylsiloxane mit höchstens einer Verzweigung pro Kette bekannt. Die Endgruppen solcher Polydialkylsiloxane

EC 110

sind beispielsweise Trialkylsilylgruppen, bevorzugt Trimethylsilylgruppen, die durch Zusatz von Trialkylchlorsilan, beispielsweise Trimethylchlorsilan, bei der Herstellung dieser Silicium enthaltenden Polymeren eingeführt werden. Die erfindungsgemäß ein- setzbaren Polydialkylsiloxane können teilweise an- stelle der Alkylgruppen Vinylgruppen enthalten. Als Vinylgehalt sei beispielsweise ein solcher von 0,1 bis 0,3 Gew.-%, bezogen auf das Gesamtgewicht des Polydialkylsiloxans, genannt.

Als polyolefinhaltige Polymere seien solche genannt, die durch Polymerisation von ethylenisch ungesättigten Monomeren erhalten werden können. Beispiele für solche ethylenisch ungesättigten Monomeren sind Ethylen, Propylen, Buten-1, Hexen-1, Octen-1, Alkylacrylate, wie Methylacrylat oder Ethylacrylat oder Vinylester, wie Vinylchlorid oder Vinylacetat. Diese ethylenisch ungesättigten Monomeren können homopolymerisiert oder copolymerisiert sein. Beispiele für erfindungsgemäß einsetzbare polyolefinhaltige Polymere sind: Polyethylen, Polypropylen, Polybutylen, Polyhexylen, Ethylen-Propylen- -Copolymer, Ethylen-Buten-Copolymer, Polyvinylchlorid, Ethylen-Methylacrylat-Copolymer und Ethylen-Vinylacetat- Copolymer. Bevorzugt werden polyethylenhaltige Polymere eingesetzt, wie Low-Density-Polyethylen (LDPE) oder Ethylen-Vinylacetat-Copolymer (EVA).

Erfindungsgemäß werden polyolefinhaltige Polymere mit

EC 110

einer Dichte von 0,910 bis 0,940 g/cm³, bevorzugt von 0,918 bis 0,930 g/cm³, eingesetzt. Bei Copolymeren ist unter diesen Dichteangaben die äquivalente Dichte zu verstehen, die besagt, daß eine Folie aus dem Copolymeren in ihrer Steifigkeit einer Folie gleicher Wanddicke aus einem Olefin-Homopolymerisat der genannten Dichte entspricht.

Als Schmelzindex der erfindungsgemäß einsetzbaren polyethylenhaltigen Polymeren sei beispielsweise ein solcher von 0,1 bis 20 g/10 Minuten (190°C), bevorzugt 0,2 bis 0,5 g/10 Minuten (190°C), genannt.

Besonders bevorzugt unter den erfindungsgemäßen Polymermischungen seien solche genannt, die als polyolefinhaltiges Polymeres ein Ethylen-Vinylacetat-Copolymeres (EVA) mit einem Gehalt von 0,1 bis 20 Gew.-%, bevorzugt 0,1 bis 10 Gew.-%, besonders bevorzugt 1,5 bis 3,5 Gew.-%, Vinylacetat, bezogen auf das Gesamtgewicht des Copolymeren, enthalten.

Für den Fall daß als polyolefinhaltiges Polymeres LDPE oder EVA eingesetzt werden, kann es vorteilhaft sein, beispielsweise bis etwa 50 Gew.-% Niederdruckpolyethylen und/oder Polypropylen, bezogen auf die Gesamtmenge an polyolefinhaltigen Polymeren, zuzusetzen.

Die erfindungsgemäßen Polymerabmischungen können weiterhin die dem Fachmann bekannten üblichen Mengen an Stabilisatoren, Antiblockmitteln, Rußen, Farbmittel und/oder andere übliche Füllstoffe oder Additive enthalten.

EC 110

Die aus den erfindungsgemäßen Polymerabmischungen hergestellten Formkörper, Ummantelungen, Folien oder anderen Extrudate zeigen im wesentlichen unveränderte mechanische Eigenschaften. Dagegen zeigen solche Erzeugnisse stark veränderte Gleiteigenschaften an ihrer Oberfläche. Beispielsweise wird bei der Messung des Reibwertes einer Folienoberfläche eine deutliche Erniedrigung des Reibwertes festgestellt. Werden beispielsweise bei dem polyolefinhaltigen Polymeren als Grundharz Reibungskoeffizienten von 0,45 bis 0,55 festgestellt, liegen diese Werte bei Folien aus den erfindungsgemäßen Abmischungen bei 0,2 bis 0,35. Es ergeben sich somit Verringerungen der Reibwerte um etwa 30 bis etwa 60 % des Ausgangswertes, insbesondere um etwa 38 bis 50 %.

Die erfindungsgemäßen Polymerabmischungen zeigen weiterhin ein unterschiedliches Verhalten beim Verschweißen, bezogen auf ein Polymeres oder eine Polymerabmischung ohne einen Gehalt an Polydialkylsiloxan. So kommt es beispielsweise bei Folien aus den erfindungsgemäßen Polymerabmischungen und bei Siegeltemperaturen von etwa 95°C zu einem Abfall der Schweißnahtfestigkeit von 95 bis 98 %, bezogen auf das Polydialkylsiloxan-freie Material. Bei einer Temperatur von etwa 100°C kommt es sodann zu einem Abfall der Schweißnahtfestigkeit von etwa 70 bis 95 %, bei etwa 105°C zu einem Abfall von 8 bis 30 %, bei etwa 110°C von 4 bis 10 % und bei Temperaturen von etwa 120°C und darüber sind keine Unterschiede gegenüber einem Material ohne Polydialkyl-

EC 110

siloxan mehr festzustellen. Diese Unterschiede machen sich bei der dem Fachmann bekannten "Kaltverschweißung" bemerkbar. Diese Kaltverschweißung besagt, daß beispielsweise bei eingeschrumpften Paletten, die noch hohe Temperaturen aufweisen, ein Selbstverschweißen von sich berührenden Folienflächen, beispielsweise der Folien der Verpackungssäcke mit der Schrumpffolie, erfolgen kann. Dieses unerwünschte Selbstverschweißen wird bei der Verwendung der erfindungsgemäßen Polymerabmischungen für die Herstellung von Schrumpfhauben für die Konfektionierung von Versandpaletten vermieden. Solche nicht selbtverschweißenden. Schrumpfhauben sind auch als Trennschichthauben bekannt. Übliche Trennschichthauben sind beispielsweise coextrudierte Zweischichten-Schrumpfhauben, die beispielsweise aus einer LDPE-Schicht außen und beispielsweise einer Polypropylen- oder einer HDPE-Schicht innen bestehen.

Gegenüber solchen aufwendig herzustellenden, aus zwei Schichten bestehenden Trennschichthauben bedeuten Trennschichthauben aus den erfindungsgemäßen Polymerabmischungen einen bedeutenden technischen Fortschritt. Beim Öffnen von Paletten, die mit nicht selbstverschweißenden Trennschichthauben versehen waren, unterbleibt ein Aufreißen des Verpackungsmaterials und dadurch ein Verlust bzw. eine Beschädigung der verpackten Güter. Die Erfindung betrifft daher weiterhin die Verwendung der weiter oben beschriebenen Polymerabmischungen zur Herstellung von Trennschichthauben.

EC 110

Die deutlich verminderte Neigung zum gegenseitigen Haften und unerwünschten Selbstverschweißen der erfindungsgemäßen Polymerabmischungen zeigt sich weiterhin bei der Herstellung von Isoliermaterial oder Außenumhüllungen für elektrische und optische Leitungssysteme. Bei vielen Kabelkonstruktionen ist es nämlich erforderlich, daß sich die äußere Schicht bei der praktischen Handhabung relativ leicht von der darunter befindlichen Umhüllung der einzelnen Adern eines Kabels trennen lassen muß. Bisher verwendete mehradrige Kabel müssen zur leichteren Trennbarkeit und Schälbarkeit der einzelnen Schichten, beispielsweise der Umhüllung der einzelnen Adern einer dazwischenliegenden Isolierschicht und einer Mantelschicht durch aufwendige Arbeitsschritte, beispielsweise unter Verwendung von Trennmaterialien, wie Talkum, hergestellt werden. Bei Verwendung einzelner oder aller Einzelschichten der genannten Kabelteile aus den erfindungsgemäßen Polymerabmischungen entfallen solche aufwendigen Arbeitsvorgänge. Die Erfindung betrifft daher weiterhin die Verwendung der oben beschriebenen Polymerabmischungen zur Herstellung von leicht schälbaren Umhüllungen von elektrischen und optischen Leitungssystemen.

Formkörper, beispielsweise Folien, aus den erfindungsgemäßen Abmischungen zeigen weiterhin an ihrer Oberfläche eine verbesserte Gleitwirkung. Solche Folien zeigen beispielsweise nicht die dem Fachmann bekannte Erscheinung des "Blockens", wobei eine plötzlich auftretende Erhöhung der Haftung bei aneinander vorbei-

EC 110

gleitenden Folienoberflächen auftritt. Weiterhin eignen sich solche Folien zur Herstellung von Beuteln und Säcken, die infolge der stark verringerten gegenseitigen Haftung leicht geöffnet werden können. Solche Folien und daraus hergestellte Verpackungsmittel heben sich vorteilhaft gegenüber solchen des Standes der Technik ab, bei denen zur Erreichung des gleichen Effektes Gleitmittel, beispielsweise Ölsäureamid, eingesetzt werden müssen. Durch den Einsatz solcher Gleitmittel nach dem Stande der Technik ergeben sich Reibwerte an derart ausgerüsteten Folienoberflächen von etwa 0,2, beispielsweise 0,16 bis 0,2, während Folienoberflächen aus erfindungsgemäßen Abmischungen bereits ohne Zusätze Reibwerte zwischen 0,2 und 0,35 ergeben gegenüber Reibwerten von 0,45 und 0,55 bei Folien ohne Anteil an siliciumhaltigen Polymeren. Zugesetzte Gleitmittel nach dem Stande der Technik zeigen weiterhin infolge der Migration und der Verarmung der Folie an Gleitmittel im Laufe der Zeit einen weiteren Nachteil, der durch die erfindungsgemäßen Polymerabmischungen überwunden wird. Selbstverständlich können die Reibwerte bei erfindungsgemäßen Polymerabmischungen durch einen zusätzlichen Einsatz von bekannten Gleitmitteln weiter verbessert werden, wobei jedoch bei einem vorgegebenen Reibwert bei den erfindungsgemäßen Polymerabmischungen stets ein wesentlich geringerer Gleitmittelgehalt gegenüber den Polymeren nach dem Stande der Technik erforderlich ist. Die Erfindung betrifft daher weiterhin die Verwendung der oben beschriebenen Polymerabmischungen zur Herstellung von Folien mit erhöhten Gleiteigenschaften für leicht zu öffnende Beutel und Säcke.

Die erfindungsgemäßen Polymerabmischungen zeigen weiter-

EC 110

hin eine ausgeprägte Verbesserung der Spannungsrißbeständigkeit. Vergleicht man beispielsweise die erfindungsgemäßen Polymerabmischungen unter Einsatz eines Polydialkylsiloxans mit Polymerabmischungen nach dem Stande der Technik, die durch einen Zusatz von synthetischen Kautschuken, wie Ethylen-Propylen-Polymeren (EPM) oder Ethylen-Propylen-Dien-Polymeren (EPDM) gekennzeichnet sind, so ist erfindungsgemäß eine 70 bis 80 Gew.-% geringere Zusatzmenge an Polydialkylsiloxan, verglichen mit dem Zusatz an bekannten synthetischen Kautschuken, erforderlich, um den gleichen Wert für die Spannungsrißbeständigkeit zu erreichen. Die erfindungsgemäßen Polymeren eignen sich daher für extrudierte Produkte mit hoher Arbeitsaufnahme und Dehnung, beispielsweise als Platten für Deponiezwecke, für Landwirtschaftsfolien oder die bereits beschriebenen Trennschichthauben und Kabelmaterialien. Die Erfindung betrifft daher weiterhin die Verwendung der beschriebenen Polymerabmischungen zur Herstellung von Extrudaten mit erhöhter Spannungsrißbeständigkeit.

Es wurde weiterhin ein Verfahren zur Herstellung von Polymerabmischungen, die 92 bis 99,8 Gew.-% eines polyolefinhaltigen Polymeren mit einem Schmelzindex von 0,1 bis 20 g/10 Minuten (190°C) und 0,2 bis 8 Gew.-% eines linearen Polydialkylsiloxans mit einem Molekulargewicht von 400 000 bis 1 000 000 enthalten, gefunden, das dadurch gekennzeichnet ist, daß man ein solches polyolefinhaltiges Polymeres in der genannten Menge und ein solches Polydialkylsiloxan in der ge-

EC 110

nannten Menge in feinteiliger Form mischt und gemeinsam extrudiert, wobei gegebenenfalls übliche Stabilisatoren und/oder Farbmittel zugesetzt werden.

Zur Herstellung der erfindungsgemäßen Polymerabmischungen kann beispielsweise von einem Masterbatch ausgegangen werden, das aus dem polyolefinhaltigen Polymeren und 10 bis 50 Gew.-%, bevorzugt 20 bis 40 Gew.-%, des Polydialkylsiloxans besteht. Ein solches Masterbatch kann durch Zumischen von weiteren polyolefinhaltigen Polymeren auf die vorgesehene Endkonzentration eingestellt werden. Das Abmischen geschieht in einer dem Fachmann bekannten Weise, beispielsweise durch Zudosieren der genannten Bestandteile, beispielsweise über Dosierwaagen, und nachfolgendes Extrudieren. Hierbei ist der Einsatz eines üblichen Einwellen-Extruders ausreichend. Es ist jedoch auch möglich, in nur einem Arbeitsschritt die vorgesehene Endkonzentration des Polydialkylsiloxans durch gemeinsames Extrudieren mit dem polyolefinhaltigen Polymeren herzustellen, wobei der Einsatz eines Zweiwellen-Extruders vorteilhaft sein kann. Die vorherige Herstellung eines Masterbatches und danach erfolgende Abmischung ist wegen der größeren Dosiergenauigkeit bevorzugt.

Bei der Herstellung der erfindungsgemäßen Polymerabmischungen durch gemeinsame Extrusion eines polyolefinhaltigen Polymeren und eines Polydialkylsiloxans können weitere Zusatzstoffe in die erfindungsgemäßen Polymerabmischungen in üblichen und dem Fachmann bekannten Mengen eingebracht werden. Solche Zusatzstoffe sind beispielsweise Stabilisatoren und/oder Farbmittel. Gegebenenfalls kann

EC 110

auch zusätzliches Gleitmittel, wie oben beschrieben, zugesetzt werden.

Die Herstellung der erfindungsgemäßen Polymerabmischungen durch Extrusion erfolgt bei einer Temperatur von 160° bis 240°C bevorzugt von 190° bis 210°C.

Die erfindungsgemäßen Polymerabmischungen werden zunächst in Form eines Granulats als Halbzeug erhalten, daß entsprechend dem Verwendungszweck einer weiteren, dem Fachmann bekannten Umarbeitung zugeführt wird.

EC 110

## Beispiele

Die äquivalente Dichte eines Ethylen-Vinylacetat-Copolymeren (EVA) besagt, daß eine Folie aus EVA in ihrer Steifigkeit einer Folie gleicher Wanddicke aus einem Olefin-Homopolymerisat der genannte Dichte entspricht.

Die Bestimmung der Reibwerte erfolgte nach DIN 53 375, die der Siegelnahtfestigkeit angelehnt an DIN 53 455 (Zugversuch). Die Spannungsrißbeständigkeit wurde nach ASTM D 1693-60 T an 2 mm starken Preßplatten ermittelt, die vor der Prüfung 16 Stunden bei 70°C getempert wurden.

## Beispiel 1

Ein Ethylen-Vinylacetat-Copolymeres (EVA) mit einem Vinylacetat-Gehalt von 2 Gew.-%, das einen Schmelzindex von 0,40 g/10 Minuten (190°C) und eine äquivalente Dichte von 0,922 g/cm³ hat, wurde über ein 40 %iges Masterbatch, bestehend aus dem gleichen Grundharz und einem Dimethylpolysiloxan mit einem mittleren Molekulargewicht von 750 000, durch Mischen auf einen Dimethylpolysiloxan-Gehalt von 0,5 % eingestellt. Der Schmelzindex der Mischung betrug 0,39 g/10 min (190°C). Anschließend wurde auf einem Kiefel-RO-25-Blasfolienextruder mit einem Blaskopf von 200 mm Durchmesser, einer Spaltbreite von 0,8 mm, einem Aufblasverhältnis von 1:2,5, einer Massetemperatur von 200°C, einer Abzugsgeschwindigkeit von 15 m/min und einem Druck von 180-220 bar eine Blasfolie mit einer Schichtdicke von

EC 110

100μm hergestellt. Die Folie wies einen Reibungs-koeffizienten von $\mu_{stat.}$ = 0,328, $\mu_{dyn.}$ -0,303 (innen-innen) und $\mu_{stat.}$ = 0,362, $\mu_{dyn}$ = 0,291 (außen-außen) auf. Die Siegelnahtfestigkeit einer bei 95°C gelegten Siegelnaht betrug 0,16 N, bei 120°C, 28,2 N, bei 140°C, 30,9 N.

Beispiel 2

Ein in Beispiel 1 beschriebenes Grundharz wurde, wie in Beispiel 1 beschrieben, auf eine Konzentration von 1,0 % Dimethylpolysiloxan eingestellt; die Abmischung wies einen Schmelzindex MI = 0,40 g/10 (190°C) Minuten auf. Es wurde, wie in Beispiel 1 beschrieben, eine 100 μm starke Folie hergestellt, die einen Reibwert von $\mu_{stat.}$ = 0,275, $\mu_{dyn.}$ = 0,256 (innen-innen) und $\mu_{stat.}$ = 0,340, $\mu_{dyn.}$ = 0,333 (außen-außen) aufwies. Die Siegelnahtfestigkeit bei 95°C betrug 0,18 N, bei 120°C 29,5 N, bei 140°C 30,7 N.

Beispiel 3

Ein in Beispiel 1 beschriebenes Grundharz wurde, wie in Beispiel 1 beschrieben, auf eine Konzentration von 3 % Dimethylpolysiloxan eingestellt. Die Abmischung wies einen MI = 0,37 g/10 Minuten (190°C) auf. Eine 100 μm starke Folie ergab einen Reibungskoeffizienten von $\mu_{stat.}$ = 0,267, $\mu_{dyn.}$ = 0,240 (innen-innen) sowie $\mu_{stat.}$ = 0,330, $\mu_{dyn.}$ = 0,238 (außen-außen). Die Siegelnahtfestigkeit

EC 110

bei 95°C betrug 0,17 N, bei 120°C 22,6 N, bei 140°C 33,4 N.

Beispiel 4 (Vergleichsbeispiel)

Ein in Beispiel 1 beschriebenes EVA-Copolymeres wurde ohne weiteren Zusatz, wie in Beispiel 1 beschrieben, zu einer 100 µm starken Folie extrudiert. Der Schmelzindex betrug 0,39 g/10 Minuten (190°C). Die Folie wies einen Reibungskoeffizienten von $\mu_{stat.}$ = 0,508, $\mu_{dyn.}$ = 0,519 (innen-innen) sowie $\mu_{stat.}$ = 0,528, $\mu_{dyn.}$ = 0,512 (außen-außen) auf. Die Siegelnahtfestigkeit bei 95°C betrug 5,0 N, bei 120°C 28,2 N, bei 140°C 28,3 N.

Beispiel 5

a)  Ein in Beispiel 1 beschriebenes Grundharz wurde, wie in Beispiel 1 beschrieben, auf 1,5 % Dimethylpolysiloxangehalt eingestellt und auf einem Reifenhäuser 60-Extruder mit einem Blaskopf von 200 mm, einer Spaltbreite von 0,8 mm, einem Aufblasverhältnis von 1:4, einer Abzugsgeschwindigkeit von 6 m/min und einem Druck von 180 - 220 bar zu einer 100 µm starken Schlauchfolie verarbeitet. Aus den Folien wurden Schrumpfhauben hergestellt.

Beim Einschrumpfen von Paletten in einem K 5600 Schrumpfautomaten (Fa. Kallfass-Verpackungsmaschinen) bei 150°C (60 sec.) wurde auf 80 µm starken Säcken aus dem in Beispiel 1 beschriebenen EVA-Grundharz, die das Verpackungsgut enthielten und·auf die Palette gestapelt waren, kein Verschweißen mit der Schrumpfhaube festgestellt.

EC 110

b)  Wurden Schrumpfhauben aus dem in Beispiel 4 (Vergleichsbeispiel) beschriebenen Material hergestellt, kam es teilweise zum Verschweißen der Schrumpfhaube mit den auf der Palette gestapelten Polyethylensäcken sowie zur vereinzelten Lochbildung in der Schrumpfhaube der fertig gepackten Palette.

Beispiel 6

Die in Beispiel 5a) beschriebenen Schrumpfhauben wurden, wie in Beispiel 5a) beschrieben, bei 150°C auf eine Palette aufgeschrumpft (30 sec), wobei die mit Füllgut gefüllten Säcke aus einem EVA-Copolymeren (80 µm) mit einem Schmelzindex von 1,5 g/10 Minuten (190°C), einer äquivalenten Dichte von 0,910 g/cm³ und einem VA-Gehalt von 8,5 % hergestellt worden waren. Nach dem Einschrumpfen klebte die Schrumpfhaube nicht auf den darunter befindlichen Säcken und ließ sich beim Öffnen ohne Beschädigung der darunter liegenden Verpackung und der verpackten Güter entfernen. Wurden diegleichen Säcke mit einer Schrumpfhaube gemäß Beispiel 5b eingeschrumpft, kam es zu nahezu völliger Verschweißung zwischen Haube und Säcken.

Beispiel 7

Ein in Beispiel 1 beschriebenes EVA-Copolymeres ohne weiteren Zusatz zeigte eine Spannungsrißbeständigkeit von $F_{100}$ = 2 Std. Bei einer nach Beispiel 3 hergestellten Mischung (3 % Zusatz von Dimethylpolysiloxan) wird ein $F_{100}$-Wert von 23 Stunden ermittelt. Bei Mischungen mit einem Zusatz von 4 % liegt der $F_{50}$-Wert

EC 110

bei 161 Stunden, der $F_{100}$-Wert bei 1000 Stunden. Bei
einem Zusatz von 5 % liegt der $F_{20}$-Wert $\geq$1000 Stunden.

Beispiel 8

Ein Grundharz mit einem Schmelzindex von 2,6 g/10 Minuten
(190°C) und einer Dichte von 0,922 g/cm³, das für die
Aderisolierung bei der Kabelherstellung verwendet wurde,
wurde, wie in Beispiel 1 beschrieben, mit 3 % eines
Dimethylpolysiloxans versetzt. Das Produkt zeigte eine
verminderte Klebeneigung gegen ein Kabelmantelmaterial
auf Basis eines EVA-Copolymeren mit einem Schmelzindex
von 0,25 g/10 Minuten (190°C) und einer Dichte von 0,935
g/cm³, einem Vinylacetatgehalt von 9 % sowie einem
Rußanteil von 2,5 %.

EC 110

Patentansprüche

1. Polymerabmischungen, enthaltend 92 bis 99,8 Gew.-% eines polyolefinhaltigen Polymeren mit einem Schmelzindex von 0,1 bis 20 g/10 Minuten (190°C) und 0,2 bis 8 Gew.-% eines linearen Polydialkylsiloxans mit einem Molekulargewicht von 400 000 bis 1 000 000.

2. Polymerabmischungen nach Anspruch 1, dadurch gekennzeichnet, daß sie als Polydialkylsiloxan ein Polydimethylsiloxan enthalten.

3. Polymerabmischungen nach Anspruch 1 und 2, dadurch gekennzeichnet, daß sie als polyolefinhaltiges Polymeres ein polyethylenhaltiges Polymeres enthalten, das eine Dichte von 0,910 bis 0,940 g/cm³ und einen Schmelzindex von 0,1 bis 20 g/10 Minuten (190°C) aufweist.

4. Polymerabmischungen, nach Anspruch 1 bis 3, dadurchgekennzeichnet, daß sie als polyolefinhaltiges Polymeres ein Ethylen-Vinylacetat-Copolymeres (EVA) mit 0,1 bis 20 Gew.-% Vinylacetat, bezogen auf das Gesamtgewicht des Copolymeren, enthalten.

5. Verfahren zur Herstellung von Polymerabmischungen, enthaltend 92 bis 99,8 Gew.-% eines polyolefinhaltigen Polymeren mit einem Schmelzindex von 0,1 bis 20 g/10 Minuten (190°C) und 0,2 bis 8 Gew.-%

EC 110

eines linearen Polydialkylsiloxans mit einem Molekulargewicht von 400 000 bis 1 000 000, dadurch gekennzeichnet, daß man ein solches polyolefinhaltiges Polymeres in der genannten Menge und ein solches Polydialkylsiloxan in der genannten Menge in feinteiliger Form mischt und gemeinsam extrudiert, wobei gegebenenfalls übliche Stabilisatoren und/oder Farbmittel zugesetzt werden.

6. Verfahren nach Anspruch 5, dadurch gekennzeichnet, daß das Polydialkylsiloxan als Masterbatch in dem verwendeten polyolefinhaltigen Polymeren mit einem Gehalt von 10 bis 50 Gew.-% Polydialkylsiloxan, bezogen auf das Gesamtgewicht des Masterbatches zugesetzt wird.

7. Verwendung von Polymerabmischungen nach Anspruch 1 zur Herstellung von Trennschichthauben.

8. Verwendung von Polymerabmischungen nach Anspruch 1 zur Herstellung von Folien mit erhöhten Gleiteigenschaften für leicht zu öffnende Beutel und Säcke.

9. Verwendung von Polymerabmischungen nach Anspruch 1 zur Herstellung von Extrudaten mit erhöhter Spannungsrißbeständigkeit.

10. Verwendung von Polymerabmischungen nach Anspruch 1 zur Herstellung von leicht schälbaren Umhüllungen von elektrischen und optischen Leitungssystemen.

EC 110

0042534

Europäisches
Patentamt

**EUROPÄISCHER RECHERCHENBERICHT**

Nummer der Anmeldung
EP 81 10 4428

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | C 08 L 23/02 |
| X | US - A - 3 865 897 (J.R. FALENDER) <br> * Spalte 2, Zeile 12 bis Spalte 4, Zeile 35 * <br> --- | 1-10 | |
| | US - A - 2 992 201 (H.F. GOBER) <br> * Spalte 1, Zeilen 11-70 * <br> --- | 1-8 | |
| | DE - A - 2 235 748 (PIATKOWSKI) <br> * Seite 1, Zeile 1 bis Seite 2, Zeile 20 * <br> --- | 1-8 | |
| | US - A - 2 888 419 (M.M. SAFFORD) <br> * Patentansprüche 1-5; Spalte 1, Zeile 35 bis Spalte 3, Zeile 31 * <br> --- | 1-10 | **RECHERCHIERTE SACHGEBIETE (Int. Cl.³)** <br> C 08 L 23/02 |
| | US - A - 3 742 084 (M. OLYPHANT) <br> * Patentansprüche 1-9 * <br> --- | 1,10 | |
| A | FR - A - 1 256 816 (MONTECATINI) <br> * Seite 1 * <br> ------- | 1 | |

Der vorliegende Recherchenbericht wurde für alle Patentansprüche erstellt.

| Recherchenort | Abschlußdatum der Recherche | Prüfer |
|---|---|---|
| Den Haag | 25.09.1981 | GOOVAERTS |

EPA form 1503.1  06.78